# EUROPEAN PATENT APPLICATION

(11) **EP 4 730 517 A1**
(43) Date of publication of application: **22.04.2026**
(21) Application number: 25208484.3
(22) Date of filing: 14.10.2025
(51) Int. Cl.: H01M 50/213, H01M 50/24, H01M 50/249

(54) **POWER STORAGE DEVICE, AND MANUFACTURING METHOD AND INSPECTION METHOD THEREOF**

(30) Priority: 17.10.2024 JP 2024182239
(71) Applicant: TOYOTA JIDOSHA KABUSHIKI KAISHA, Toyota-shi, Aichi-ken 471-8571 (JP)
(72) Inventor: MATSUSHITA, Taro, Toyota-shi, 471-8571 (JP); NAKAMURA, Kota, Toyota-shi, 471-8571 (JP); YAMATO, Hiroki, Toyota-shi, 471-8571 (JP)
(74) Representative: TBK

(57) **Abstract**

A power storage device includes: a cylindrical battery; a holder that retains the cylindrical battery and that includes a one-end wall that faces a crimped section and an outer peripheral wall that extends from the one-end wall, the crimped section having a ring-shape and being provided to a one-end portion of the cylindrical battery in its axial direction; a first hole that is provided so as to penetrate the one-end wall of the holder in the axial direction; a groove that is provided in the one-end wall of the holder, the groove having a recessed shape open toward the crimped section side and extending along the crimped section so as to communicate with the first hole; and a resin member disposed at at least a portion of the groove including the crimped section side of the groove.

## Description

### BACKGROUND

### Technical Field

The present disclosure relates to a power storage device, and to a manufacturing method and inspection method for a power storage device.

### Related Art

In a known power storage device, a power storage cell configured by a secondary battery or the like is housed in a holder to protect the power storage cell from external shocks. For example, Japanese Patent Application Laid-Open (JP-A) No. 2015-053205 discloses a battery pack (or a power storage device) including a holder to retain plural cylindrical batteries.

However, for cylindrical batteries (or power storage cells) provided in a battery pack or the like as disclosed in JP-A No. 2015-053205, it is desirable to maintain airtightness of the cylindrical batteries in order to suppress ingress of air from outside, and there is room for improvement in the sealing properties between the cylindrical batteries and their holder.

### SUMMARY

In consideration of the above circumstances, the present disclosure provides a power storage device capable of improving sealing properties between cylindrical batteries and their holder, and provides a manufacturing method and inspection method for a power storage device.

A first aspect of the present disclosure is a power storage device that includes a cylindrical battery, a holder that retains the cylindrical battery and that includes a one-end wall that faces a crimped section and an outer peripheral wall that extends from the one-end wall, the crimped section having a ring-shape and being provided to a one-end portion of the cylindrical battery in its axial direction;
a first hole that is provided so as to penetrate the one-end wall of the holder in the axial direction; a groove that is provided in the one-end wall of the holder, the groove having a recessed shape open toward the crimped section side and extending along the crimped section so as to communicate with the first hole; and a resin member disposed at at least a portion of the groove including the crimped section side of the groove..

In the power storage device according to the first aspect, the first hole is provided so as to penetrate the one-end wall of the holder in the axial direction, and communicates with the groove that has a recessed shape open toward the crimped section side and that extends along the crimped section. The resin member is disposed at at least a portion of the groove including the crimped section side of the groove. Therefore, in the cylindrical battery, the crimped section needing better sealing properties may be sealed by the resin member, and sealing properties between the cylindrical battery and the holder may be improved.

A second aspect of the present disclosure is a power storage device according to the first aspect, wherein the resin member is disposed in at least a portion of the first hole.

In the power storage device according to the second aspect, the resin member is disposed in at least a portion of the first hole and, therefore, when the resin member is disposed in the groove through the first hole, the resin member can be checked as being disposed in the groove that communicates with the first hole.

A third aspect of the present disclosure is a power storage device according to any one of the above aspects, wherein the outer peripheral wall is provided so as to have a gap to a circumferential direction outer peripheral face of the cylindrical battery, and the power storage device further includes a communication path that communicates the groove with the gap.

The power storage device according to the third aspect includes the gap provided between the outer peripheral wall of the holder and the outer peripheral face of the cylindrical battery, and includes the communication path that communicates with the groove.
Therefore, when the resin member is disposed in the groove, the resin member can be checked as being disposed in the groove by checking the resin member that has flowed into the gap through the communication path.

A fourth aspect of the present disclosure is a power storage device according to of any one of the above aspects, wherein the power storage device further includes a discharge valve provided at the one-end portion of the cylindrical battery, and the groove is disposed separated from the discharge valve when viewed along the axial direction.

In the power storage device according to the fourth aspect, since the groove is disposed separated from the discharge valve, the sealing properties can be improved without impeding valve-opening of discharge valve.

A fifth aspect of the present disclosure is a power storage device according to the fourth aspect, further including a second hole that is provided in the one-end wall of the holder and that is disposed facing the discharge valve.

In a configuration in which the holder retains plural cylindrical batteries and a second hole is provided in the one-end wall of the holder and is disposed facing the discharge valve, there is more need for sealing properties between adjacent cylindrical batteries. The power storage device according to the fifth aspect includes the second hole provided in the one-end wall of the holder disposed facing the discharge valve, however the resin member is disposed in at least a portion of the groove including the crimped section side of the groove. Therefore, the crimped section that needs better sealing properties in a cylindrical battery may be sealed by the resin member, enabling the sealing properties to be improved between the cylindrical battery and the holder, and thereby enabling the sealing properties to be improved between adjacent cylindrical batteries.

A sixth aspect of the present disclosure is a power storage device according to any one of the above aspects, wherein the power storage device further includes a resilient member that includes the groove and that is provided at the cylindrical battery side of the one-end wall of the holder, and the resilient member has a smaller Younge's modulus than the holder.

In the power storage device according to the sixth aspect, since the resilient member provided with the groove has a smaller Younge's modulus than the holder, an excessive amount of leakage of the resin member from the groove can be suppressed by the resilient member accommodating manufacturing tolerances in the cylindrical battery and the holder.

A seventh aspect of the present disclosure is a power storage device according to any one of the above aspects, wherein the power storage device further includes plural first holes provided in the one-end wall of the holder.

In the power storage device according to the seventh aspect, since the one-end wall of the holder includes the plural first holes, when the resin member is disposed in the groove, the resin member may be checked as being disposed in the groove by checking the resin member that has outflowed from a first hole that is not the first hole serving as a liquid injection port for the resin member.

An eighth aspect of the present disclosure is a power storage device according to the any one of the above aspects incorporating the third aspect, wherein the communication path includes a first portion formed with an axial direction height higher than a height of the communication path on the first hole side.

In a power storage device according to the eighth aspect, since the communication path includes the first portion formed with an axial direction height higher than the axial direction height of the communication path on the first hole side, the first portion has lower pressure than the first hole side when the resin member is flowed in. This accordingly enables outflow of the resin member to be facilitated when the resin member is injected through the first hole.

A ninth aspect of the present disclosure is a power storage device according to any one of the above aspects incorporating the third aspect, wherein the resin member is disposed extending from the groove to the communication path.

In the power storage device according to the ninth aspect, since the resin member is disposed extending to the communication path, adhesion properties between the resin member and the holder, and between the resin member and the cylindrical batteries, may be improved, thereby enabling sealing properties to be improved.

A tenth aspect of the present disclosure is a manufacturing method for manufacturing a power storage device of any one of the above aspects, the manufacturing method including dividing the holder in the axial direction, attaching a one-end side holder of the divided holder including the one-end wall to a cathode side of the cylindrical battery, injecting the resin member into the groove through the first hole, detecting the resin member injected into the gap from an opposite side of the gap to the one-end wall, and stopping injection of the resin member through the first hole in a case in which the resin member injected into the gap has reached a predetermined specific amount.

In the manufacturing method according to the tenth aspect, the resin member is injected into the groove through the first hole, the resin member injected into the gap is detected from the opposite side of the gap to the one-end wall, and injection of the resin member through the first hole is stopped in a case in which the resin member injected into the gap has reached the predetermined specific amount. Therefore, the resin member may be checked as being disposed in the groove by detecting the resin member that has flowed into the gap, enabling simpler checking for production defects. Moreover, due to being able to seal the crimped section with a smaller amount of the resin member than when the resin member fills the entire gap, an increase in weight of the power storage device can be suppressed from occurring while still improving the sealing properties between the cylindrical batteries and the holder.

An eleventh aspect of the present disclosure is the manufacturing method of the tenth aspect, wherein injection of the resin member is performed with the one-end wall positioned at a lower side in a vertical direction.

In the manufacturing method according to the eleventh aspect, due to injection of the resin member being performed with the one-end wall positioned at the lower side in the height direction, subsequent inspection processes can be executed more smoothly.

A twelfth aspect of the present disclosure is the manufacturing method of the above aspects, wherein detection of the resin member that has flowed into the gap is performed at an opposite side to the first hole with respect to an axis of the cylindrical battery interposed therebetween.

In the manufacturing method according to the twelfth aspect, detection of the resin member that has flowed into the gap is performed at the opposite side to the first hole with the axis of the cylindrical battery interposed therebetween, thereby enabling detection of the resin member to be performed at the far side from the first hole where the resin member is injected. Therefore, the resin member may be more reliably detected as flowing around the entire groove.

A thirteenth aspect of the present disclosure is an inspection method for inspecting that the resin member is disposed in the groove in the power storage device of any one of the above aspects, the inspection method including, after the resin member has been injected into the groove through the first hole, detecting the resin member that has flowed into the gap from at an opposite side of the gap to the one-end wall.

In the inspection method according to the thirteenth aspect, when the resin member has been injected into the groove through the first hole, the resin member that has flowed into the gap is detected at the opposite side of the gap to the one-end wall. Therefore, the resin member may be checked as being disposed in the groove by detecting the resin member that has flowed into the gap, thereby enabling simpler checking for production defects. Moreover, due to being able to seal the crimped section with a smaller amount of the resin member than when the resin member fills the entire gap, an increase in weight of the power storage device may be suppressed from occurring while still improving the sealing properties between the cylindrical batteries and the holder.

A fourteenth aspect of the present disclosure is the inspection method of the thirteenth aspect, wherein detection of the resin member that has flowed into the gap is performed based on an image acquired by imaging the gap.

In the inspection method according to the fourteenth aspect, detection of the resin member that has flowed into the gap is performed based on the image acquired by imaging the gap. This accordingly enables confirmation that the resin member is disposed in the gap to be made when the resin member appears in the image.

A fifteenth aspect of the present disclosure is the inspection method of any of the above aspects, wherein detection of the resin member that has flowed into the gap is performed by measuring displacement in the gap.

In the inspection method according to the fifteenth aspect, the detection of the resin member that has flowed into the gap is performed by measuring the displacement in the gap. Therefore, the resin member can be confirmed as having flowed into the gap when there has been a change in the displacement in the gap. Moreover, an amount of the resin member that has flowed into the gap may be detected by measuring the displacement amount.

A sixteenth aspect of the present disclosure is the inspection method of any of the above aspects, wherein detection of the resin member that has flowed into the gap is performed with the one-end wall positioned at a lower side in a vertical direction.

In the inspection method according to the sixteenth aspect, the detection of the resin member that has flowed into the gap is performed with the one-end wall positioned at the height direction lower side. Therefore, the resin member that has flowed into the gap may be detected from the upper side, thereby enabling operational performance to be improved.

A seventeenth aspect of the present disclosure is the inspection method according to any one of the above aspects, wherein detection of the resin member that has flowed into the gap is performed at an opposite side to the first hole with respect to an axis of the cylindrical battery interposed therebetween.

In the inspection method according to the seventeenth aspect, detection of the resin member that has flowed into the gap is performed at the opposite side to the first hole with respect to the axis of the cylindrical battery interposed therebetween, thereby enabling detection of the resin member to be performed at the far side from the first hole where the resin member is injected. Therefore, the resin member may be more reliably detected as flowing around the entire groove.

As described above, the power storage device according to the present disclosure, and the manufacturing method and inspection method thereof, enable the sealing properties between a cylindrical battery and a holder to be improved.

### BRIEF DESCRIPTION OF THE DRAWINGS

Exemplary embodiments of the present disclosure will be described in detail based on the following figures, wherein:
Fig. 1 is a schematic top view illustrating an example of a holder of a power storage device according to a first exemplary embodiment of the present disclosure;
Fig. 2 is a schematic cross-section of a power storage device taken along line A-A of the holder of Fig. 1;
Fig. 3 is a schematic cross-section illustrating a modified example of the power storage device of Fig. 2;
Fig. 4 is a schematic cross-section illustrating an example of a range including the power storage cell illustrated by the broken line in Fig. 2;
Fig. 5 is an enlarged cross-section of an enlargement of part of Fig. 4;
Fig. 6 is a flowchart illustrating an example of a manufacturing method of a power storage device;
Fig. 7 is a schematic cross-section for explaining a method of injecting a resin member;
Fig. 8 is a schematic cross-section for explaining a resin member inspection method;
Fig. 9 is an enlarged cross-section of an enlargement of a portion including a power storage cell of a power storage device according to a second exemplary embodiment of the present disclosure;
Fig. 10 is a schematic bottom view of a resilient member employed in the power storage device of Fig. 9, as viewed from a power storage cell side; and
Fig. 11 is a schematic cross-section for explaining a resin member injection method and inspection method for the power storage device of Fig. 9.

### DETAILED DESCRIPTION

Explanation follows regarding exemplary embodiments for implementing the present disclosure, with reference to the drawings. Note that the following schematically indicates a relevant range needed to describe how to achieve an object of the present disclosure, and mainly describes a range needed to describe relevant sections of the present disclosure, with parts not described being known technology. Moreover, the same or similar reference numerals will be appended across the drawings to the same or equivalent members, and duplicate description thereof will be omitted. Furthermore, in order to facilitate reading of the drawings, when the drawings include plural of the similar or equivalent members, sometimes reference numerals will only be appended to some thereof.

### First Exemplary Embodiment

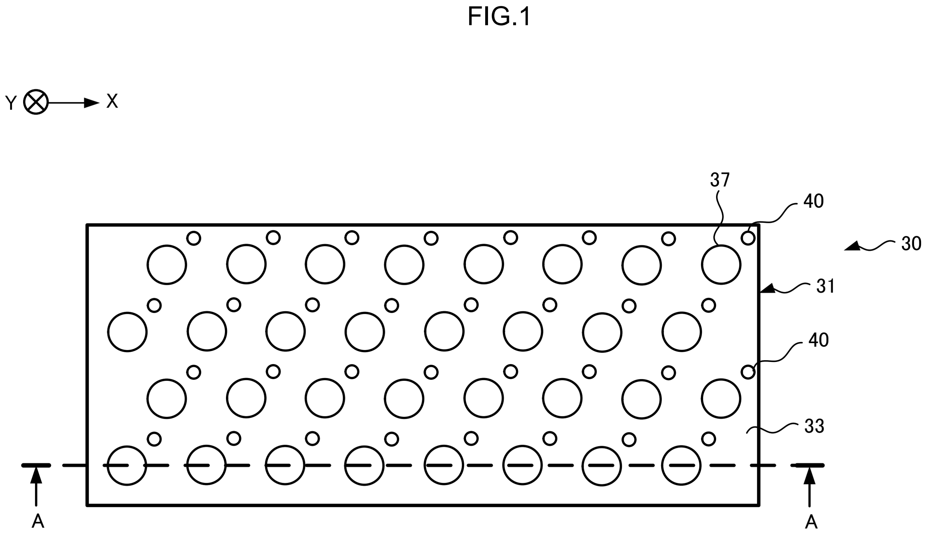

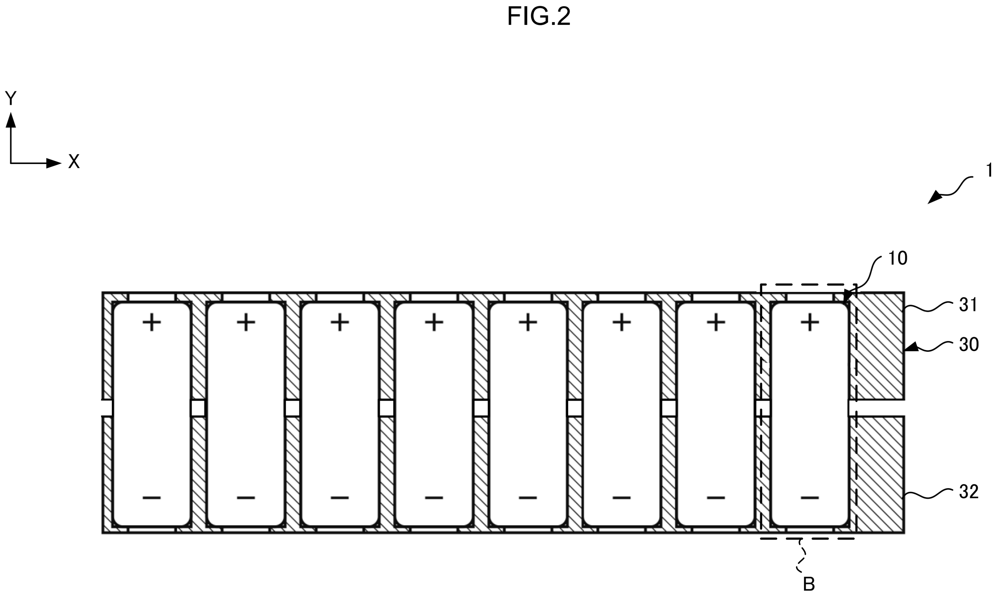

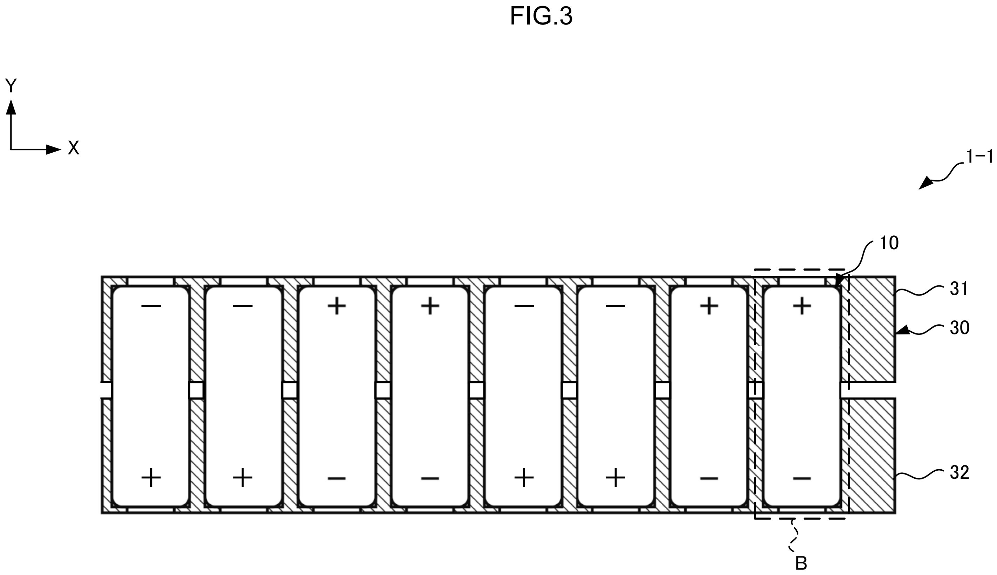

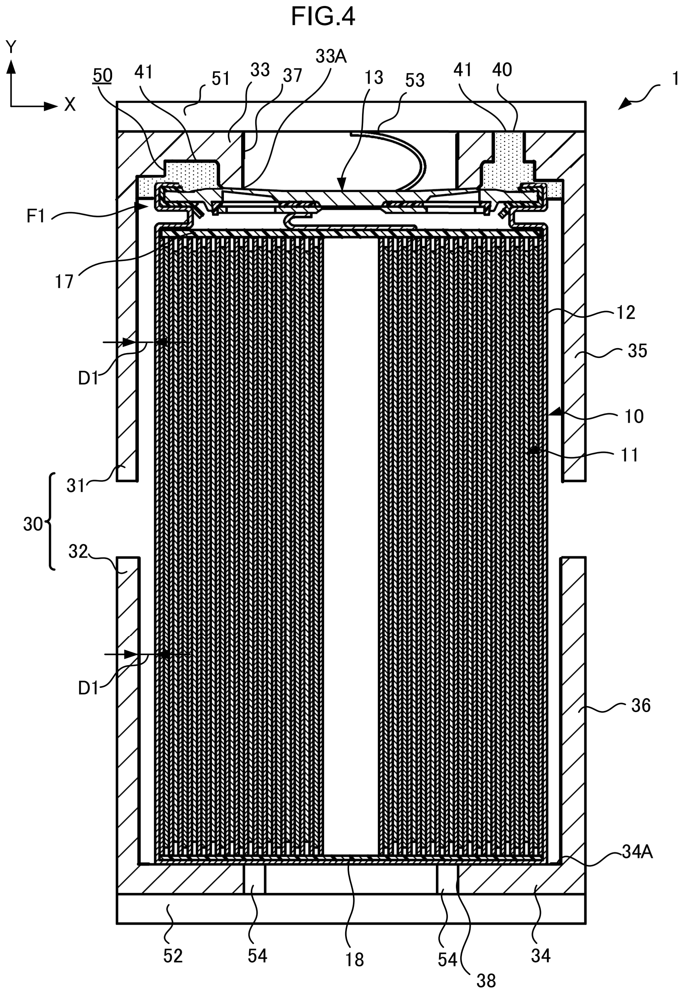

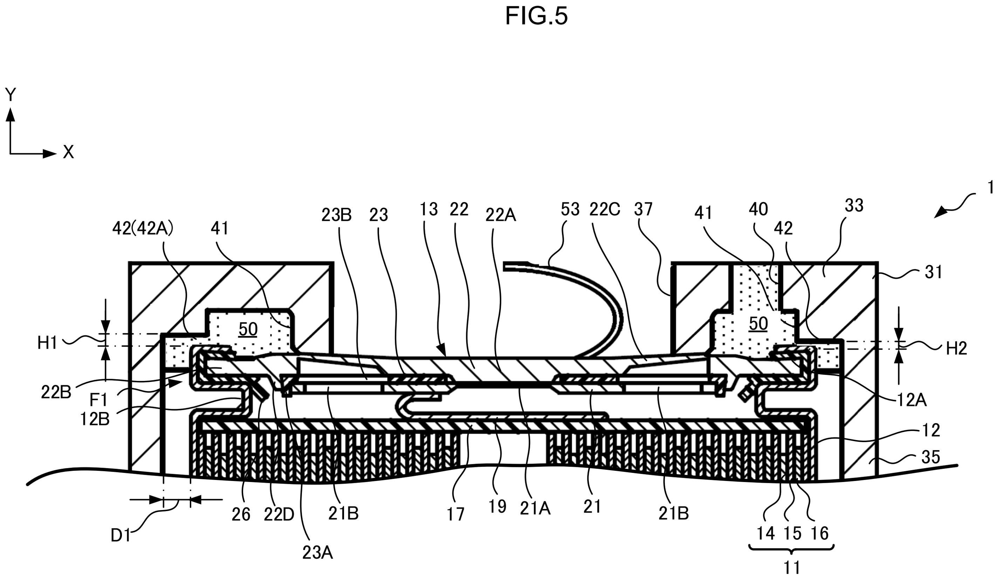

Fig. 1 is a schematic top view illustrating an example of a holder 30 of a power storage device 1 according to a first exemplary embodiment of the present disclosure. Fig. 2 is a schematic cross-section of the power storage device 1 taken along line A-A of the holder 30 of Fig. 1, Fig. 3 is a schematic cross-section illustrating a modified example of the power storage device 1 of Fig. 2, and Fig. 4 is a schematic cross-section illustrating an example of a range including a cylindrical battery illustrated by the broken line in Fig. 2. Fig. 5 is an enlarged cross-section of an enlargement of part of Fig. 4. The power storage device 1 according to the first exemplary embodiment is, as an example, employed in an electric bicycle, an electric car, or the like. The power storage device 1 includes, as in the example illustrated in Fig. 1 and Fig. 2, power storage cells 10 serving as plural cylindrical batteries, and the holder 30 to retain the plural power storage cells 10. Note that in the following description an arrow X direction in Fig. 2 may be referred to as being a width direction or a lateral direction, and the arrow Y direction (axial direction) may be referred to as being vertical direction or a height direction. Note that in the present exemplary embodiment the plus side in the arrow Y direction corresponds to a one-end side (first side), and the minus side thereof corresponds to an other-end side (second side). For ease of explanation the plus side in the arrow Y direction will be described as being an upper side, and the minus side thereof will be described as being a lower side.

The power storage cells 10 according to the present exemplary embodiment may be configured by batteries including an electrolyte solution such in a lithium-ion battery. As illustrated in Fig. 4, the power storage cell 10 includes at least an electrode assembly 11, a casing 12 housing the electrode assembly 11 together with the electrolyte solution, and a plate-shaped member 13 that at least partially closes off an opening of the casing 12. Note that although the present exemplary embodiment illustrates an embodiment of the power storage cell 10 including an electrolyte solution, a liquid is not necessarily contained inside the power storage cell.

The electrode assembly 11 may, for example, be configured by a wound electrode assembly. The electrode assembly 11 may include a strip-shaped cathode 14 and anode 15, and have a wound structure with a separator 16 of similar strip shape in an interposed state therebetween. The cathode 14 may be formed of a metal, such as cobalt, nickel, manganese, or an iron phosphate-based material, employed either singly or as a combination thereof. Moreover, a carbon-based material or another alloy may be used as the anode 15. Furthermore, a porous sheet having both ion-permeability and insulating properties may be used as the separator 16. Examples of materials that may be used for such a material include a polyolefin resin such as polyethylene or polypropylene, cellulose, or the like.

The electrolyte solution encapsulated in the power storage cell 10 may be an organic solvent, such as an ethylene carbonate, dimethyl carbonate, diethyl carbonate, or the like, with a lithium electrolyte salt dissolved therein. Note that the material and shape of each of the configuration elements configuring the electrode assembly 11, the type of the electrolyte solution, and the like may be appropriately selected and used based on such factors as the usage application of the power storage device 1.

An upper insulation plate 17 and a lower insulation plate 18 are provided at the top and bottom of the electrode assembly 11. As illustrated in Fig. 5, a cathode lead 19 having a one-end electrically connected to a winding direction intermediate portion of the cathode 14 is provided to the upper insulation plate 17. Note that a through hole for insertion of the cathode lead 19 may be provided in the upper insulation plate 17. The other-end of the cathode lead 19 is electrically connectable to a terminal plate 21, described later.

The casing 12 may be configured by an outer can formed from a metal container having a bottomed cylindrical shape. An opening 12A is provided to an upper portion of the casing 12, with the opening 12A being closed off by the plate-shaped member 13 after insertion of the electrode assembly 11 and the electrolyte solution into the casing 12. The casing 12 is able to function as an anode terminal electrically connected to the anode 15 by connection of a non-illustrated anode lead electrically connected to an end portion of the wound anode 15, or to an appropriate location on the anode 15. The casing 12 may be manufactured by being formed into a bottomed cylindrical shape by performing drawing or the like on a metal plate.

The plate-shaped member 13 may be configured by a closure member that closes off the opening 12A of the casing 12. The plate-shaped member 13 of the present exemplary embodiment includes a terminal plate 21 where the other-end of the cathode lead 19 is attached by welding or the like, a valve 22 serving as a discharge valve arranged opposing the terminal plate 21, and an insulation plate 23 positioned between the terminal plate 21 and the valve 22.

The terminal plate 21 may be configured by a substantially circular plate-shaped member formed from a metal, for example from stainless steel (SUS), aluminum, or an aluminum alloy. A central portion 21A of the terminal plate 21 is formed comparatively thin compared to other portions, and a central portion of the valve 22 is joined, by welding or by bonding using an adhesive or the like, to the upper face side of the central portion 21A. Plural air holes 21B are also provided at positions a specific distance in the radial direction away from the central portion 21A of the terminal plate 21.

The valve 22 may be configured by a substantially circular plate-shaped member having a larger diameter than the terminal plate 21. The valve 22 may be manufactured by pressing a plate member made from a metal, such as stainless steel (SUS), aluminum, or an aluminum alloy. Adopting stainless steel, aluminum, an aluminum alloy, or the like as the material for the valve 22 enables a common material to be used to that of the terminal plate 21, and also facilitates joining the valve 22 and the terminal plate 21 together, such as by welding.

The valve 22 of the present exemplary embodiment has different thicknesses in the radial direction thereof. Specifically, a thin portion 22C is provided so as to connect a radial direction central portion 22A and an outer peripheral portion 22B of the valve 22 together. A lower face of the central portion 22A of the valve 22 is configured with a profile bulging downwards so as to facilitate joining to the central portion 21A of the terminal plate 21. The lower face of the outer peripheral portion 22B is also provided with one or more support walls 22D that support an outer peripheral edge of the insulation plate 23.

The insulation plate 23 may be configured by a substantially circular ring-shaped plate having a through hole provided in a central portion thereof. The insulation plate 23 is arranged so as to be sandwiched between the upper face of the terminal plate 21 and the lower face of the valve 22. One or more downward extending support walls 23A are provided to an outer peripheral edge portion of the insulation plate 23 to support the outer peripheral edge of the terminal plate 21. A configuration in which the terminal plate 21 and the valve 22 are easily positioned can be realized by the terminal plate 21 being supported by the support walls 23A of the insulation plate 23. In addition, plural air holes 23B are provided in the insulation plate 23 so as to communicate the air holes 21B of the terminal plate 21 with the thin portion 22C of the valve 22.

The valve 22 described above functions as a so-called explosion-proof valve to prevent damage to the casing 12 by the thin portion 22C being pressed and inverted by pressure when pressure inside the casing 12 rises. Current being supplied by the power storage cell 10 is forcibly interrupted by the central portion 22A of the valve 22 and the central portion 21A of the terminal plate 21 that were joined together being physically separated from each other when this occurs.

The power storage cell 10 is sealed by an edge portion of the plate-shaped member 13 of the above configuration being crimp-fixed to the opening 12A by a crimped section F1. An example of a structure of the crimped section F1 will now be described.

The crimped section F1 has a ring shape and provided to an axial direction (height direction) end portion of the power storage cell 10, or more specifically to the opening 12A portion of the casing 12, and crimp-fixes the outer peripheral portion 22B of the valve 22, serving as an example of an edge portion of the plate-shaped member 13, with a gasket 26 interposed therebetween. The crimped section F1 is obtained by bending the casing 12 into a shape so as to surround a periphery of the outer peripheral portion 22B of the valve 22, and then clamping and crimping from above and below using a non-illustrated pressing device. In the present exemplary embodiment, since a leading end at the upper side of the gasket 26 and a leading end at the upper side of the casing 12 are pressed downward, these are positioned further to the axial direction lower side than circumferential direction outsides thereof. The gasket 26 functions as a seal member to maintain airtightness of the power storage cell 10. In addition thereto, the gasket 26 also has a function to electrically insulate between the casing 12 and the terminal plate 21. The gasket 26 may be configured from a relatively soft insulating material, such as a synthetic resin.

A ring-shaped recess 12B indented toward the inner peripheral side of the casing 12 is provided around the entire periphery of the casing 12 and between the opening 12A and a housing position of the upper insulation plate 17, in the height direction of the casing 12. The ring-shaped recess 12B supports the electrode assembly 11 and the like that are housed inside the casing 12 by support inside the casing 12. In addition, an upper face of the ring-shaped recess 12B functions as a placement face, where the outer peripheral portion 22B of the valve 22 is placed with the gasket 26 interposed therebetween.

The opening 12A is bend so as to surround the lower face, side face, and upper face of the outer peripheral portion 22B of the valve 22 placed on the upper face of the ring-shaped recess 12B, in a state in which the gasket 26 is interposed therebetween. This means that, as illustrated in Fig. 4 and Fig. 5, the gasket 26 and the outer peripheral portion 22B of the valve 22 are crimp-fixed at the inside of the opening 12A by being pressed from above and below using a non-illustrated pressing device. The crimped section F1 also, due to the gasket 26 being interposed between the casing 12 and the valve 22, realizes insulation of the valve 22 from the casing 12 while also securing airtightness of this portion.

The holder 30 retains plural of the power storage cells 10 configured as described above housed internally therein, and may be configured from an insulating material such as a resin material or the like. As illustrated in Fig. 2 and Fig. 4, the holder 30 of the present exemplary embodiment is configured from an upper holder 31 that houses the cathode side of the power storage cells 10, and a lower holder 32 that houses the anode side of the power storage cells 10. Note that although a single upper holder 31 and a single lower holder 32 are illustrated in Fig. 4, the holder 30 of the present exemplary embodiment may, for example, be configured by plural upper holders 31 or lower holders 32 connected together in the lateral direction or vertical direction, as illustrated in Fig. 2. Moreover, although in the present exemplary embodiment the upper holder 31 and the lower holder 32 are illustrated as being divided from each other in the height direction, the upper holder 31 and the lower holder 32 are finally joined together by an adhesive, fastening members, or the like.

Note that in the power storage device 1 of the present exemplary embodiment, the upper holder 31 houses the cathode side of the power storage cells 10, and the lower holder 32 houses the anode side of the power storage cells 10. Moreover, in the power storage device 1 of the present exemplary embodiment, all of the power storage cells 10 are arranged such that their cathode sides are at the upper side and their anode sides are at the lower side, with all of the power storage cells 10 connected together in parallel. However, the present disclosure is not limited thereto. For example, in order to raise the voltage some of the power storage cells 10 may be connected together in series. Specifically, as in the example illustrated in Fig. 3, each pair of power storage cells 10 may be arranged with their cathode sides at the lower side and anode sides at the upper side, in other words, the power storage cells 10 may be arranged such that the orientations of their cathodes are vertically inverted for each pair of power storage cells 10. In such cases, the upper holder 31 houses the power storage cells 10 by housing a mixture of the cathode side of some power storage cells 10 and the anode side of some power storage cells 10, and the lower holder 32 also houses the power storage cells 10 by housing a mixture of the cathode side of some power storage cells 10 and the anode side of some power storage cells 10.

As illustrated in Fig. 4, the upper holder 31 and the lower holder 32 include lid portions 33, 34 that protect the power storage cells 10 by abutting upper or lower faces of the power storage cells 10, and include peripheral wall portions 35, 36 that extend in the height direction from the outer periphery of the lid portions 33, 34 and that serve as outer peripheral walls surrounding the outer periphery of the power storage cells 10. The lid portions 33, 34 may each be configured from a substantially circular ring-shaped member that has a through hole 37, 38 provided in a central portion thereof for insertion of a cathode bus bar lead 53 or an anode bus bar lead 54, described later. The lower face of the lid portion 33 configures a support face 33A for supporting the plate-shaped member 13. Furthermore, the upper face of the lid portion 34 configures a support face 34A for supporting a bottom portion of the casing 12.

The peripheral wall portions 35, 36 are substantially cylinder-shaped members, with a diameter of the inner peripheral face thereof adjusted so as to be a larger diameter than the outer diameter of the power storage cells 10 housed in the holder 30. In other words, the peripheral wall portions 35, 36 are each provided so as to leave a gap D1 to a circumferential direction outer peripheral face of the power storage cell 10. A length of the peripheral wall portions 35, 36 along the height direction is adjusted to approximately that such that the two leading end portions of the peripheral wall portions 35, 36 oppose each other, so as to leave a slight spacing therebetween, when the power storage cells 10 are housed inside the holder 30.

A cathode bus bar 51 is attached to the upper face of the lid portion 33 of the upper holder 31. The cathode bus bar 51 is electrically connected to the cathode of each of the power storage cells 10 through the cathode bus bar lead 53, and more specifically is electrically connected to the valve 22 joined to the terminal plate 21. Similarly, an anode bus bar 52 is attached to the lower face of the lid portions 34 of the lower holder 32. The anode bus bar 52 is electrically connected to the anodes of each of the power storage cells 10 through the anode bus bar lead 54, and more specifically is electrically connected to the casing 12.

In the power storage cells 10 having the configuration described above, sometimes there is, for example, a slight leak of liquid that occurs due a rise in pressure inside the casing 12, or caused by an external shock. Moreover, most of such leaking liquid is generated at the periphery of the crimped section F1. There is accordingly a need to perform liquid leakage prevention by improving the sealing properties between the power storage cells 10 and the upper holder 31 configuring the holder 30. In consideration thereof, the power storage device 1 of the present exemplary embodiment adopts a liquid leakage prevention structure for the upper holder 31. The liquid leakage prevention structure will now be described.

The lid portion 33 of the upper holder 31 opposes the ring-shaped crimped section F1, and corresponds to a one-end wall of the present disclosure. As illustrated in Fig. 1 to Fig. 5, a first hole 40 is provided in the lid portion 33 so as to penetrate the lid portion 33 in the axial direction. The first hole 40 is arranged at an outer peripheral portion of the through hole 37, which serves as a second hole and is arranged facing the valve 22, and arranged with a gap to the through hole 37. Specifically, the first hole 40 is provided at a circumferential direction substantially central portion at the outer peripheral portion of the through hole 37of the lid portion 33.

As illustrated in Fig. 4 and Fig. 5, a groove 41 is provided to the lid portion 33 of the upper holder 31 with the groove 41 having a recess shape open to the crimped section F1 side and extending along the ring-shaped crimped section F1. Namely, the groove 41 is formed in a ring shape, and is arranged separated from the valve 22 when viewed along the axial direction. The groove 41 is, for example, formed with a groove width larger than the diameter of the first hole 40, with the groove 41 and the first hole 40 being in communication with each other.

As illustrated in Fig. 4 and Fig. 5, the upper holder 31 includes a communication path 42 that communicates the groove 41 with the gap D1. The communication path 42 extends from a circumferential direction outer side of the ring-shaped groove 41 toward the gap D1. As illustrated in Fig. 5, a height H1 of the communication path 42 is formed higher than a height H2 of a portion of the communication path 42 at the first hole 40 side. In the present exemplary embodiment, the communication path 42 formed with the height H1 is referred to as a first portion 42A. In the present exemplary embodiment, for example, the communication path 42 is provided in a ring shape at an outer peripheral portion of the groove 41. Note that the communication path 42 may, for example, be provided divided into the first portion 42A, and a portion other than the first portion 42A. In such case, a hole for injection of a resin member 50, described later, is respectively provided in the first portion 42A and in the portion other than the first portion 42A.

The resin member 50, which is configured from a synthetic resin or the like and functions as the seal member, is disposed in the groove 41 configured as described above. A hard resin or the like may be employed for the resin member 50. In the present exemplary embodiment, as an example, the resin member 50 is disposed in the entire groove 41 and disposed so as to extend from the groove 41 into the communication path 42. The resin member 50 is also disposed in part of the upper end side of the gap D1. Note that the resin member 50 is disposed so as to seal contact locations where there is a high possibility of liquid leakage occurring in the crimped section F1, and specifically is disposed so as to seal locations where the upper side leading end of the casing 12 contacts the outer peripheral portion 22B of the valve 22, with the gasket 26 interposed therebetween. Namely, it is sufficient that the resin member 50 is disposed so as to seal the above contact locations, in other words, it is sufficient that the resin member 50 is disposed in a region including the crimped section F1 side of the groove 41 and, if so, the resin member 50 is not necessarily disposed at the bottom side of the groove 41 other than the region including the crimped section F1 side.

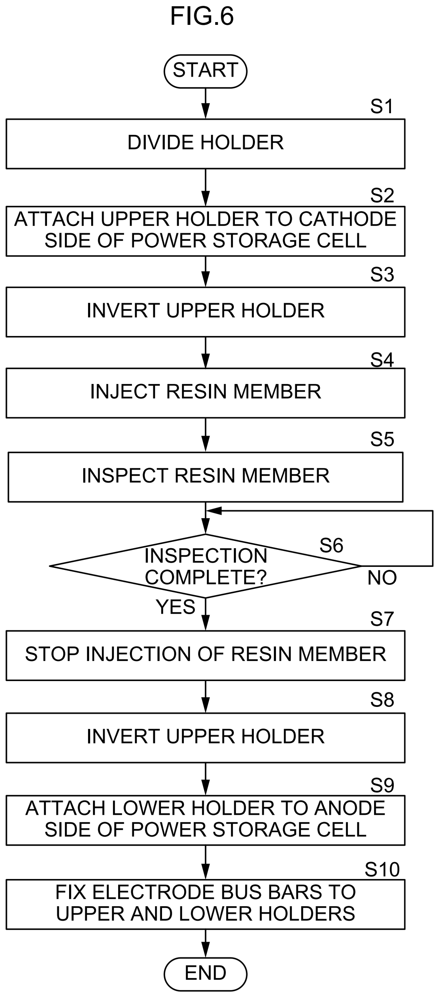

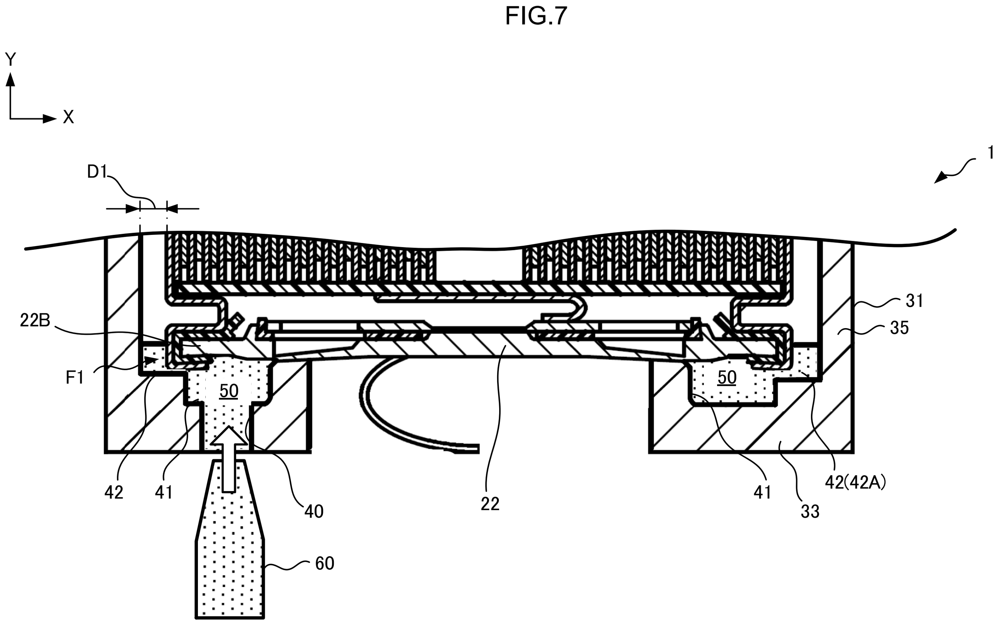

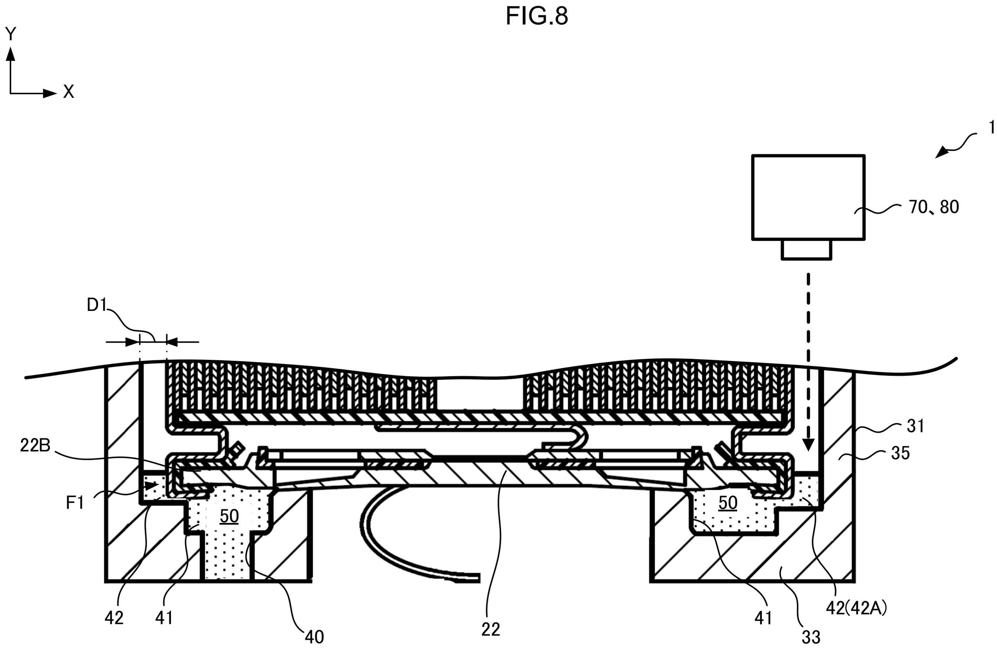

Next, description follows regarding a manufacturing method for manufacturing the above power storage device 1, and regarding an inspection method for inspecting that the resin member 50 is disposed in the groove 41 for the above power storage device 1. Fig. 6 is a flowchart illustrating an example of a manufacturing method of the power storage device 1, Fig. 7 is a schematic cross-section for explaining a method of injecting the resin member 50, and Fig. 8 is a schematic cross-section for explaining an inspection method for inspecting the resin member 50.

As illustrated in Fig. 6, first, at step S1, the holder 30 is divided into the upper holder 31 and the lower holder 32. Next, at step S2, the upper holder 31 is attached to the cathode side of the power storage cells 10, namely, to the side where the valves 22 are disposed. At step S3, the vertical direction of the power storage cells 10 having the upper holder 31 attached thereto is inverted. Specifically, as illustrated in Fig. 7, the power storage cells 10 having the upper holder 31 attached thereto are inverted such that the lid portion 33 of the upper holder 31 are positioned at the height direction lower side.

Injection of the resin member 50 is started at step S4. Specifically, for example as illustrated in Fig. 7, by using a dispenser 60, the resin member 50 is injected through the first hole 40, filling the groove 41 with the resin member 50.

At step S5, an inspection is performed to inspect whether the resin member 50 is disposed in the groove 41. In the present exemplary embodiment, for example as illustrated in Fig. 8, whether the resin member 50 is disposed in the groove 41 is checked by detecting the resin member 50 that has flowed into the gap D1. Specifically, the resin member 50 is detected from the opposite side to the lid portion 33, at a portion of the gap D1 at the opposite side to the first hole 40 with respect to the axis of the power storage cell 10. The detection of the resin member 50 may, for example, be performed by acquiring an image by using an imaging device 70 such as a camera to image the gap D1, and then based on the acquired image determining whether or not the resin member 50 has flowed into the gap D1. The image may be a still image or may be a video image. Note that when it is determined based on the image that the resin member 50 has flowed into the gap D1 and the injection amount of the resin member 50 injected through the first hole 40 has reached a predetermined specific amount, this means that the above-described contact locations of the crimped section F1 are blocked off by the resin member 50.

The detection of the resin member 50 may also, for example, be performed by determining whether or not the resin member 50 has flowed into the gap D1 by using a displacement measurement instrument 80, such as a laser displacement sensor, to determine whether or not the resin member 50 has flowed into the gap D1. In such cases the displacement measurement instrument 80 may determine whether or not the resin member 50 that has flowed into the gap D1 has reached a predetermined height direction position. Note that the height direction position is set at a height position higher than the contact locations of the crimped section F1 , which is the position opposite to the lid portion 33 side thereof. The above-described contact locations of the crimped section F1 are blocked by the resin member 50 when the resin member 50 has reached such a position.

Returning to Fig. 6, when it is determined that inspection of the resin member 50 is not complete at step S6 (step S6: NO), inspection of the resin member 50 continues to be performed until inspection is complete. However, injection of the resin member 50 is stopped at step S7 when it is determined that inspection of the resin member 50 has been completed at step S6 (step S6: YES). Determination of completion of the inspection of the resin member 50 at step S6 is performed by whether or not the injected resin member 50 has reached the predetermined specific amount.

Next, at step S8, the vertical direction of the power storage cells 10 having the upper holder 31 attached thereto is inverted. Specifically, the lid portions 33 of the upper holder 31 are inverted from a state positioned at the height direction lower side as illustrated in Fig. 7, to a state in which the lid portions 33 of the upper holder 31 are positioned at the height direction upper side as illustrated in Fig. 4.

Then at step S9, the lower holder 32 is attached to the anode side of the power storage cells 10, namely the side where the valves 22 are not disposed, and the upper holder 31 and the lower holder 32 are fixed together by a non-illustrated fixing means, such as bolts. Finally, at step S10, assembly (manufacture) of the power storage device 1 is completed by fixing the cathode bus bar 51 and the anode bus bar 52 to the upper holder 31 and the lower holder 32 by welding or the like.

Next, description follows regarding the operation and effects of the power storage device 1 of the first exemplary embodiment.

In the power storage device 1 according to the first exemplary embodiment, the first holes 40 are provided in the lid portion 33 of the upper holder 31 of the holder 30 so as to pass through the lid portion 33 in the axial direction, and each of the first holes 40 communicates with the groove 41 that has a recessed shape open toward the crimped section F1 side and extends along the crimped section F1. The resin member 50 is disposed in at least a part of the groove 41 that includes the crimped section F1 side of the groove 41. This means that the crimped section F1 needing better sealing properties in the power storage cell 10 can be sealed by the resin member 50, and so sealing properties between the power storage cell 10 and the holder 30 may be improved.

Moreover, the power storage device 1 according to the first exemplary embodiment is equipped with the communication path 42 that communicates the gap D1 with the groove 41, where the gap D1 is provided between the peripheral wall portions 35 of the upper holder 31 and the outer peripheral faces of the power storage cells 10. Therefore, when the resin member 50 is disposed in the groove 41, the resin member 50 can be checked as being disposed in the groove 41 by checking the resin member 50 that has flowed into the gap D1 through the communication path 42.

Moreover, in the power storage device 1 according to the first exemplary embodiment, the groove 41 is arranged separated from the valve 22, enabling the sealing properties to be improved without impeding valve-opening of the valve 22.

Moreover, there is more need for sealing properties between adjacent power storage cells 10 when, as in the power storage device 1 according to the first exemplary embodiment, the holder 30 retains plural of the power storage cells 10 and the through holes 37 are provided in the lid portion 33 of the upper holder 31 and arranged facing the valves 22. Although in the power storage device 1 according to the first exemplary embodiment the through holes 37 are provided in the lid portion 33 of the upper holder 31 and are arranged so as to face the valves 22, the resin member 50 is disposed in at least part of the grooves 41 including the crimped section F1 side of the grooves 41. Therefore, the crimped section F1 needing better sealing properties in the power storage cells 10 can be sealed by the resin member 50, and the sealing properties between the power storage cells 10 and the holder 30 may be improved, and so the sealing properties between adjacent of the power storage cells 10 may also be improved.

Moreover, in the power storage device 1 according to the first exemplary embodiment, the communication path 42 includes the first portion 42A formed with an axial direction height that is higher than the axial direction height of the communication path 42 on the first hole 40 side and, therefore, the pressure when the resin member 50 flows in is lower at the first portion 42A than at the first hole 40 side. This accordingly enables easy outflow of the resin member 50 when the resin member 50 is injected through the first hole 40.

Moreover, in the power storage device 1 according to the first exemplary embodiment, since the resin member 50 is disposed so as to extend along the communication path 42, adhesion properties between the resin member 50 and the holder 30, and between the resin member 50 and the power storage cells 10, may be improved, thereby enabling sealing properties to be improved.

In the manufacturing method of the power storage device 1 according to the first exemplary embodiment, the resin member 50 is injected through the first holes 40 into the grooves 41, and the resin member 50 that has flowed into the gap D1 is detected from the opposite side of the gap D1 to the lid portion 33 side thereof. Then, injection of the resin member 50 through the first holes 40 is stopped when the resin member 50 that has flowed into the gap D1 has reached the predetermined specific amount. Therefore, the fact that the resin member 50 is disposed in the grooves 41 may be confirmed by detecting the resin member 50 that has flowed into the gap D1, enabling production defects to be checked more easily. Moreover, the crimped section F1 may be sealed with a smaller amount of the resin member 50 than cases in which the resin member 50 fills the entire gap D1, enabling an increase in the weight of the power storage device 1 to be suppressed from occurring while still improving the sealing properties between the power storage cells 10 and the holder 30.

Moreover, in the manufacturing method of the power storage device 1 according to the first exemplary embodiment, injection of the resin member 50 is performed with the lid portions 33 positioned at the height direction lower side, enabling subsequent inspecting processes to be executed more smoothly.

Moreover, in the manufacturing method of the power storage device 1 according to the first exemplary embodiment, detection of the resin member 50 injected into the gap D1 is performed at the opposite side to the first hole 40 with respect to the axis of the power storage cell 10 interposed therebetween, thereby enabling detection of the resin member 50 to be performed at the far side from the first hole 40 where the resin member 50 is injected. Therefore, the resin member 50 may be more reliably detected as flowing around the entire groove 41.

In the inspection method to inspect that the resin member 50 is disposed in each of the grooves 41 in the power storage device 1 according to the first exemplary embodiment, when the resin member 50 has been injected into the groove 41 through the first hole 40, the resin member 50 that has flowed into the gap D1 is detected from the opposite side of the gap D1 to the lid portion 33. Therefore, checking that the resin member 50 is disposed in the groove 41 may be performed by detecting the resin member 50 that has flowed into the gap D1, enabling production defects to be checked more easily. Moreover, the crimped section F1 may be sealed with a smaller amount of the resin member 50 that cases in which the resin member 50 fills the entire gap D1, thereby enabling an increase in the weight of the power storage device 1 to be suppressed from occurring while still improving the sealing properties between the power storage cells 10 and the holder 30.

Moreover, in the inspection method to inspect that the resin member 50 is disposed in each of the grooves 41 in the power storage device 1 according to the first exemplary embodiment, detection of the resin member 50 that has flowed into the gap D1 may be performed based on an image acquired by imaging the gap D1. This accordingly enables the fact that resin member 50 is disposed in the gap D1 to be confirmed when the resin member 50 appears in the image.

In the inspection method to inspect that the resin member 50 is disposed in each of the grooves 41 in the power storage device 1 according to the first exemplary embodiment, detection of the resin member 50 that has flowed into the gap D1 may also be performed based on measurement of displacement in the gap D1. This means that the resin member 50 may be confirmed as having flowed into the gap D1 when there has been a change in the displacement in the gap D1. Moreover, the amount of the resin member 50 that has flowed into the gap D1 may be detected by measuring the displacement amount.

Moreover, in the inspection method to inspect that the resin member 50 is disposed in each of the grooves 41 in the power storage device 1 according to the first exemplary embodiment, detection of the resin member 50 that has flowed into the gap D1 is performed with the lid portion 33 positioned at the height direction lower side. This accordingly enables the resin member 50 that has flowed into the gap D1 to be detected from above, enabling operational performance to be improved.

Moreover, in the inspection method to inspect that the resin member 50 is disposed in each of the grooves 41 in the power storage device 1 according to the first exemplary embodiment, detection of the resin member 50 that has flowed into the gap D1 is performed at the opposite side to the first hole 40 with respect to the axis of the power storage cell 10 interposed therebetween, thereby enabling detection of the resin member 50 to be performed at the far side from the first hole 40 where the resin member 50 is injected. Therefore, the resin member 50 may be more reliably detected as flowing around the entire groove 41.

### Second Exemplary Embodiment

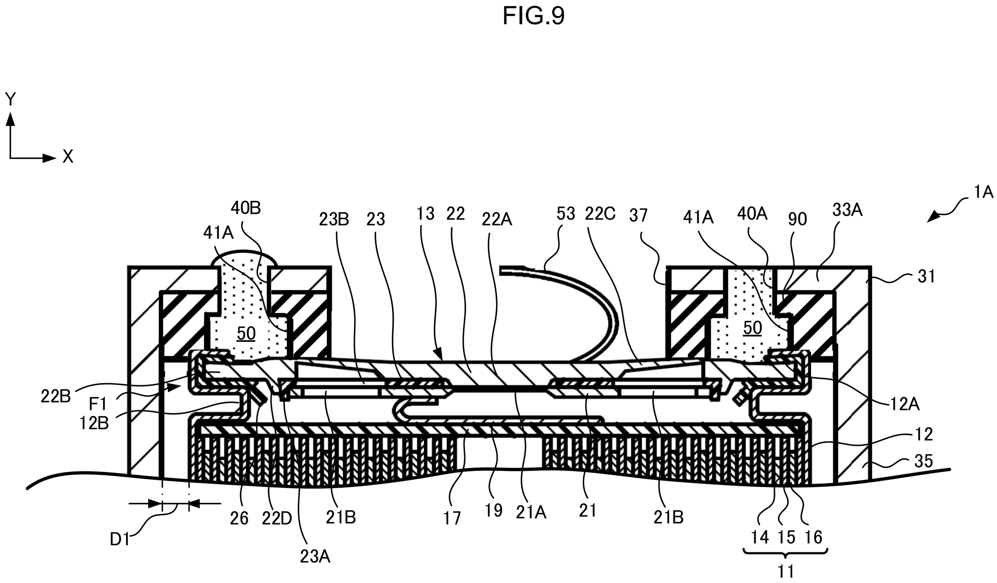

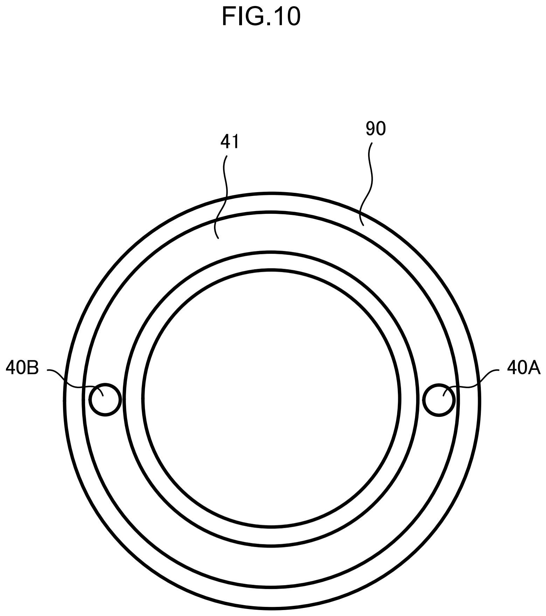

Whereas in the power storage device 1 of the first exemplary embodiment there is one first hole 40 provided to communicate with each of the grooves 41, in a power storage device 1A of a second exemplary embodiment there are two first holes 40A, 40B provided to communicate with each groove 41A. Fig. 9 is an enlarged cross-section of an enlargement of a portion including a power storage cell 10 of the power storage device 1A according to a second exemplary embodiment of the present disclosure, and Fig. 10 is a schematic bottom view of a resilient member 90 employed in the power storage device 1A of Fig. 9, as viewed from a power storage cell 10 side. Note that the same reference numerals are appended in Fig. 9 to configuration similar to that of the power storage device 1 of the first exemplary embodiment, and explanation thereof will be omitted.

The power storage device 1A of the present exemplary embodiment is, as illustrated in Fig. 9, not provided with a groove 41 in a lid portion 33, but includes the resilient member 90 that is formed with the groove 41A and is provided at the power storage cell 10 side of the lid portion 33. Specifically, the resilient member 90 is provided between an upper outer periphery of the power storage cell 10 where a crimped section F1 is positioned, and the lid portion 33.

A ring-shaped member having a specific thickness may be employed for the resilient member 90, and a soft material having a sealing function, such as a synthetic resin, may be employed therefor. One face of the resilient member 90, for example, a lower face thereof, abuts the crimped section F1 and abuts an inner portion of the surface of the plate-shaped member 13 where is adjacent to the crimped section F1, and another face on the opposite side of the resilient member 90, for example the upper face, abuts the lid portion 33 of the upper holder 31.

The resilient member 90 is configured from a material having a smaller Younge's modulus than the holder 30. As a specific example, the resilient member 90 may be formed from a rubber.

Preferably the outer diameter of the resilient member 90 of the present exemplary embodiment is adjusted so as to be substantially the same as the inner diameter of the peripheral wall portion 35 of the upper holder 31, thereby enabling simple positioning of the resilient member 90 with respect to the upper holder 31. Moreover, the inner diameter of the resilient member 90 is adjusted so as to be substantially the same as the diameter of a through hole 37.

The groove 41A provided in the resilient member 90 has a recessed shape open toward the crimped section F1 side and extends along the ring-shaped crimped section F1. Namely, the groove 41A is formed in a ring shape, and is disposed separated from a valve 22 as viewed along the axial direction of the power storage cell 10. Moreover, the groove 41A is, for example, formed with a groove width that is larger than a diameter of the first holes 40A, 40B, with each of the two first holes 40A, 40B respectively in communication with the groove 41A.

As illustrated in Fig. 9, in the resilient member 90, the one first hole 40A from out of the two first holes 40A, 40B, and the other first hole 40B, are provided at corresponding positions on the other side of the axis to each other. In the present exemplary embodiment, for example, the one first hole 40A is used as an injection port for the resin member 50, and the other first hole 40B is used as a discharge port for the resin member 50.

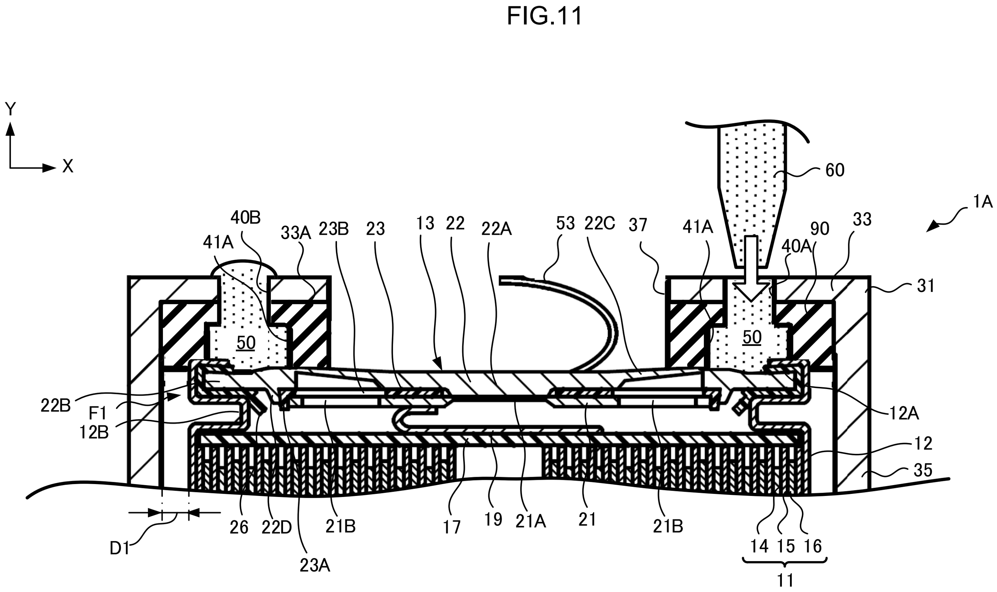

Next, description follows regarding a manufacturing method for manufacturing the power storage device 1A, and an inspection method for the power storage device 1A to inspect that the resin member 50 is disposed in the grooves 41A. Fig. 11 is a schematic cross-section for explaining an injection method and an inspection method of the resin member 50 for the power storage device 1A of Fig. 9.

The power storage device 1 including the resilient member 90 described above may, for example, be assembled (manufactured) by executing the following processes.
Specifically, first the resilient member 90 is inserted inside the upper holder 31, with one face of the resilient member 90 in a state abutted against the support face 33A. Next, the cathode side of the power storage cell 10 is inserted inside the peripheral wall portion 35 of the upper holder 31 having the resilient member 90 inserted therein, with the crimped section F1 of the power storage cell 10 and the outer peripheral portion 22B of the valve 22 adjacent to the crimped section F1 abutted against the resilient member 90.

Next, injection of the resin member 50 is started. Specifically, as illustrated in Fig. 11, for example, a dispenser 60 is used, and a standard amount of the resin member 50 is injected through one first hole 40A, filling the groove 41A with the resin member 50. The standard amount is greater than an amount that completely fills the groove 41A and the two first holes 40A, 40B.

Next, inspection is performed to inspect that the resin member 50 is disposed in the groove 41A. In the present exemplary embodiment, for example as illustrated in Fig. 11, detection of whether there is a discharge of the resin member 50 from the other first hole 40B, and determination is made that the resin member 50 is disposed in the groove 41A when it is detected that the resin member 50 is discharged from the other first hole 40B.

When the resin member 50 has filled the groove 41A, a portion of each of the casings 12 that are exposed outside of the upper holder 31 of the power storage cell 10 are inserted inside the lower holder 32 and housed therein, and the upper holder 31 and the lower holder 32 are fixed together with a non-illustrated fixing means, such as bolts. When this is performed, the power storage cell 10 can be fixed by reaction force of the resilient member 90 by the upper holder 31 and the lower holder 32 being fixed together in a state in which a specific pressure is imparted so as to push a cathode side end portion of the power storage cell 10 against the resilient member 90. Finally, assembly of the power storage device 1A is completed by fixing a cathode bus bar 51 and an anode bus bar 52 to the upper holder 31 and the lower holder 32 by welding or the like.

Next, description follows regarding the operation and effects of the power storage device 1A of the second exemplary embodiment.

In the power storage device 1A according to the second exemplary embodiment, the crimped section F1 of the power storage cell 10 is pressed downward by the resilient member 90 being pressed by the support face 33A of the upper holder 31. This thereby enables stronger adhesion to be achieved between the crimped section F1 and the plate-shaped member 13, and to the gasket 26, enabling high airtightness of the power storage cell 10 to be achieved.

Moreover, in the power storage device 1A according to the second exemplary embodiment, the resilient member 90 formed with the groove 41A has a smaller Younge's modulus than the holder 30, and an excessive amount of leakage of the resin member 50 from the groove 41A may be suppressed by the resilient member 90 accommodating manufacturing tolerances in the power storage cell 10 and the holder 30.

Moreover, in the power storage device 1A according to the second exemplary embodiment, since the lid portion 33 of the upper holder 31 are provided with the two first holes 40A, 40B, when the resin member 50 is being disposed in the grooves 41A, the resin member 50 may be confirmed as being disposed in the grooves 41A by checking that the resin member 50 has outflowed from the other first hole 40B, which is not the first hole 40A used as the liquid injection port for the resin member 50.

In addition thereto, the power storage cell 10 is housed inside the holder 30, with the resilient member 90 interposed therebetween, thereby enabling, for example, attenuation of external force input to the holder 30. This means that, due to adopting the configuration with the resilient member 90, the power storage device 1A of the present exemplary embodiment may also suppress the occurrence of liquid leakage caused by external force.

### Supplementary Explanation

Although, when injecting the resin member 50 in the first exemplary embodiment described above, the upper holder 31 is inverted such that the lid portion 33 of the upper holder 31 is positioned at the lower side in the vertical direction, the present disclosure is not limited thereto and inversion may be omitted.

Moreover, although in the first exemplary embodiment described above detection of the resin member 50 by the imaging device 70 or the displacement measurement instrument 80 is performed at a position on the opposite side (at 180°) to the first hole 40 with respect to the axis of the power storage cell 10 interposed therebetween, the present disclosure is not limited thereto, and detection may be performed at any appropriate position. Moreover, there is no limitation to detection being performed at a single location, and detection may be performed at plural positions.

Moreover, although in the first exemplary embodiment described above the support face 33A is provided to the lid portions 33, the present disclosure is not limited thereto. For example, a rubber member may be used for a lower portion of the lid portion 33 at a circumferential direction inner side of the groove 41, and the support face 33A may be provided to this rubber member. This results in the upper holder 31 being configured from a composite material. Adopting such a structure enables the resin member 50 to be suppressed from jutting out to the valve 22 side.

The present disclosure is not limited to the above exemplary embodiments, and various modifications may be implemented within a range not departing from the spirit of the present disclosure. All such modifications are contained in the technical concept of the present disclosure. Moreover, unless explicitly stated otherwise in the specification, each of the configuration elements of the present disclosure are not limited to one thereof, and there may be plural present thereof.

## Claims

1. A power storage device comprising:
a cylindrical battery;
a holder that retains the cylindrical battery and that includes a one-end wall that faces a crimped section and an outer peripheral wall that extends from the one-end wall, the crimped section having a ring-shape and being provided to a one-end portion of the cylindrical battery in its axial direction;
a first hole that is provided so as to penetrate the one-end wall of the holder in the axial direction;
a groove that is provided in the one-end wall of the holder, the groove having a recessed shape open toward the crimped section side and extending along the crimped section so as to communicate with the first hole; and
a resin member disposed at at least a portion of the groove including the crimped section side of the groove.

2. The power storage device of claim 1, wherein the resin member is disposed in at least a portion of the first hole.

3. The power storage device of claim 1 or 2, wherein:
the outer peripheral wall is provided so as to have a gap to a circumferential direction outer peripheral face of the cylindrical battery; and
the power storage device further comprises a communication path that communicates the groove with the gap.

4. The power storage device according to any one of claims 1 to 3, wherein:
the power storage device further comprises a discharge valve provided at the one-end portion of the cylindrical battery; and
the groove is disposed separated from the discharge valve when viewed along the axial direction.

5. The power storage device of claim 4, further comprising a second hole that is provided in the one-end wall of the holder and that is disposed facing the discharge valve.

6. The power storage device according to any one of claims 1 to 5, further comprising a resilient member that includes the groove and that is provided at the cylindrical battery side of the one-end wall of the holder; and
the resilient member has a smaller Younge's modulus than the holder.

7. The power storage device according to any one of claims 1 to 6, further comprising a plurality of the first holes provided in the one-end wall of the holder.

8. The power storage device of claim 3, wherein the communication path includes a first portion formed with an axial direction height higher than a height of the communication path at the first hole side.

9. The power storage device according to any one of claims 3 to 8, wherein the resin member is disposed extending from the groove to the communication path.

10. A manufacturing method for manufacturing the power storage device according to any one of claims 3 to 9, the manufacturing method comprising:
dividing the holder in the axial direction;
attaching a one-end side holder of the divided holder including the one-end wall to a cathode side of the cylindrical battery;
injecting the resin member into the groove through the first hole;
detecting the resin member injected into the gap from an opposite side of the gap to the one-end wall; and
stopping injection of the resin member through the first hole in a case in which the resin member injected into the gap has reached a predetermined specific amount.

11. The manufacturing method of claim 10, wherein injection of the resin member is performed with the one-end wall positioned at a lower side in a vertical direction.

12. The manufacturing method of claim 10 or 11, wherein detection of the resin member that has flowed into the gap is performed at an opposite side to the first hole with respect to an axis of the cylindrical battery interposed therebetween.

13. An inspection method for inspecting that the resin member is disposed in the groove in the power storage device according to any one of claims 3 to 9, the inspection method comprising:
after the resin member has been injected into the groove through the first hole, detecting the resin member that has flowed into the gap from an opposite side of the gap to the one-end wall.

14. The inspection method of claim 13, wherein detection of the resin member that has flowed into the gap is performed based on an image acquired by imaging the gap.

15. The inspection method of claim 13, wherein detection of the resin member that has flowed into the gap is performed by measuring displacement in the gap.

16. The inspection method according to any one of claims 13 to 15, wherein detection of the resin member that has flowed into the gap is performed with the one-end wall positioned at a lower side in a vertical direction.

17. The inspection method according to any one of claims 13 to 16, wherein detection of the resin member that has flowed into the gap is performed at an opposite side to the first hole with respect to an axis of the cylindrical battery interposed therebetween.
